# FASCICULE DE BREVET EUROPEEN

(11) **EP 1 521 542 B1**
(45) Date de publication et mention de la délivrance du brevet: **23.11.2005**
(21) Numéro de dépôt: 03755592.7
(22) Date de dépôt: 11.07.2003
(51) Int. Cl.: A47J 31/58, A47J 31/40, A47J 31/52

(54) **MACHINE A CAFE COMPORTANT UN DISPOSITIF DE VERROUILLAGE PERFECTIONNE**
KAFFEEMASCHINE MIT EINER VERBESSERTEN VERRIEGELUNGSVORRICHTUNG
COFFEE-MACHINE COMPRISING AN IMPROVED LOCKING DEVICE

(30) Priorité: 12.07.2002 FR 0208788
(43) Date de publication de la demande: 13.04.2005
(73) Titulaire: SEB S.A., 69130 Ecully (FR)
(72) Inventeur: LAIGNEAU, Gilles, F-61250 Damigny (FR); JOUATEL, Christian, F-61250 Radon (FR)
(74) Mandataire: Kiehl, Hubert
(86) Numéro de dépôt international: PCT/FR2003/002190
(87) Numéro de publication internationale: WO 2004/006741

(56) Documents cités:
- US-A- 3 292 527
- US-A- 5 642 656
- US-B1- 6 240 831

## Description

La présente invention est relative à un appareil de préparation de boissons chaudes à partir de doses préfabriquées de produits alimentaires solubles ou de percolation, tels le café moulu, le thé ou les poudres solubles.

Un appareil de préparation et distribution de boissons chaudes comprend généralement un réservoir d'eau froide, une pompe électrique, un ensemble formant chaudière et une tête d'infusion qui reçoit les doses en vue de leur injecter l'eau chaude en provenance de ladite chaudière, la boisson obtenue étant ensuite orientée vers un récipient collecteur. En fin de cycle d'infusion, la tête d'infusion doit être ouverte afin de pouvoir y insérer une nouvelle dose de produit en remplacement de celle déjà utilisée.

On connaît dans l'état de la technique des machines manuelles où la cartouche est insérée dans un porte-cartouche du type cuillère monté ensuite au bâti de la machine par l'utilisateur, par une fixation du type baïonnette ou autre ; on connaît également des machines automatiques où l'insertion d'une nouvelle cartouche, ainsi que l'éjection de la cartouche épuisée se font sans l'intervention de l'utilisateur, mais ces machines font appel à des mécanismes d'actionnement assez complexes et encombrants.

Par ailleurs, le document EP 0 151 252 décrit une machine à café comportant une tête d'infusion en deux parties : une partie inférieure fixe de réception d'une cartouche préfabriquée contenant du café et une partie supérieure formant couvercle mobile. Le couvercle mobile porte l'organe de perforation de la cartouche et d'injection d'eau à l'intérieur de celle-ci, ce couvercle étant monté mobile autour d'une charnière sous la poussée d'un ressort qui facilite la levée du couvercle. L'actionnement du couvercle en position de fermeture se fait manuellement par l'utilisateur, ainsi que celui de l'ouverture ce qui est peu pratique, pouvant même entraîner des risques de brûlure en fin de cycle d'infusion.

De la même manière, le document US 5 794 519 décrit une machine à café fonctionnant avec des cartouches de café préconditionnées, où la tête d'infusion comprend également deux parties : une inférieure de réception d'une cartouche et une supérieure pivotante autour d'une charnière appartenant au bâti de la machine. L'utilisateur appuie sur un levier de manoeuvre situé en extrémité de la partie supérieure et ferme la chambre d'infusion afin de pouvoir ainsi commencer un cycle d'infusion. En fin de cycle, l'utilisateur soulève le même levier afin de permettre à la cartouche épuisée d'être éjectée. Mis à part l'actionnement peu commode en ouverture, le moment de l'ouverture est laissé à l'appréciation de l'utilisateur. De ce fait, une ouverture avant la fin du cycle d'infusion peut s'avérer dangereuse pour l'utilisateur, car des projections d'eau chaude d'infusion pourraient survenir, alors qu'une ouverture longtemps après rallonge les cycles d'infusion, ce qui nuit à la qualité du café dans la tasse et également à la cadence de fabrication du café, au cas où plusieurs cafés sont à réaliser successivement. Le document US-3292527 décrit les caractéristiques techniques du préambule de la revendication 1.

Le but de l'invention est de remédier au moins en partie à ces inconvénients et de proposer une machine à café du type fonctionnant avec des doses de produit à infuser de construction simple et fiable en fonctionnement, facile à manipuler, tout en permettant d'obtenir une boisson de bonne qualité.

Un autre but de l'invention est d'optimiser la construction et l'agencement du dispositif de verrouillage de la tête d'infusion d'une telle machine à café, en réduisant son encombrement et son coût de fabrication, tout en conférant une sécurité accrue de l'utilisateur lorsqu'il se sert de la machine.

Ces buts sont atteints avec une machine à café apte à fonctionner avec des doses, comprenant un bâti de réception des moyens d'alimentation en eau chaude d'une tête d'infusion en deux parties : une partie fixe formant support pour au moins une dose et une partie mobile pour ouvrir et fermer ladite tête d'infusion, les deux parties étant maintenues écartées par des premiers moyens de rappel élastiques, un dispositif de verrouillage pour maintenir la tête d'infusion fermée à l'encontre desdits moyens de rappel et des moyens de réglage des paramètres d'infusion aptes à émettre au moins un signal représentatif de l'état de fonctionnement de la machine, du fait que, en fonctionnement, le dispositif de verrouillage est bloqué de manière à empêcher l'ouverture de la partie mobile de la chambre d'infusion et qu'elle comporte des moyens de commande de l'ouverture dudit dispositif de verrouillage à l'issue d'un signal émis par lesdits moyens de réglage.

Ainsi, les deux parties de la tête d'infusion sont en position normalement ouverte en étant maintenues écartées par des premiers moyens de rappel. Ces moyens de rappel sont, par exemple, un ou plusieurs ressorts de traction ou de torsion, etc. montés entre les deux parties de la tête d'infusion.

La fermeture de la tête d'infusion se fait en début de cycle d'infusion, dès l'introduction des doses à l'intérieur du logement prévu à cet effet dans la tête d'infusion. Cette fermeture peut être réalisée manuellement par l'utilisateur ou automatiquement par un mécanisme d'entraînement de la partie mobile. Un cycle d'infusion est démarré par la suite, ce cycle d'infusion étant caractérisé par certains paramètres de fonctionnement : température, temps, intensité du courant absorbé par l'élément chauffant ou par la pompe, etc. La machine comporte des moyens de réglage de ces paramêtres et/ou des moyens, tel par exemple un microcontrôleur, assurant la gestion de ces paramètres.

Une fois le cycle d'infusion terminé, lesdits moyens de réglage détectent une valeur des paramètres de fonctionnement qui est significative de la fin du cycle d'infusion. Par la suite, ces moyens, de réglage transmettent au dispositif de verrouillage une commande d'ouverture de la partie supérieure de la tête d'infusion, ouverture qui est effectuée automatiquement, sans l'intervention de l'utilisateur. L'ouverture de la tête d'infusion peut être également commandée lorsque lesdits moyens de réglage détectent un événement critique lié au mauvais fonctionnement d'un des composants de la machine, voire lorsqu'ils détectent l'absence d'une dose à l'intérieur de la tête d'infusion, ou le dépassement d'une valeur limite d'un paramètre préétabli, ou tout autre évènement qui pourrait nuire au bon fonctionnement de la machine.

Ceci permet un fonctionnement sécuritaire pour l'utilisateur, l'ouverture se faisant automatiquement une fois la boisson infusée, voire, à la limite, lorsqu'un cycle d'infusion ne peut démarrer dans des bonnes conditions. De surcroît, la boisson est ainsi obtenue à la bonne température, correspondant à un volume prédéterminé de boisson dans la tasse, selon un fonctionnement optimal de la machine. Une fois la chambre d'infusion ouverte, la machine est prête à redémarrer un nouveau cycle de préparation de café, ce qui assure une bonne cadence des cycles d'infusion, en évitant ainsi tous les temps morts.

Avantageusement, ledit dispositif de verrouillage comporte une pièce de verrouillage mobile entre une position verrouillée et une position déverrouillée en étant actionnée par un électroaimant commandé par lesdits moyens de commande.

Ainsi, avec seulement une pièce de verrouillage et un électroaimant, on arrive à obtenir un dispositif d'ouverture automatique de la tête d'infusion de la machine qui est de construction simplifiée et d'encombrement réduit. Ceci évite donc de faire appel à des mécanismes complexes du type mécanisme d'horlogerie qui ouvrent lorsqu'un intervalle de temps s'est écoulé ou tout autre type de mécanisme à mouvement combiné actionné mécaniquement.

De préférence, la partie mobile de la tête d'infusion est une mâchoire montée pivotante par rapport à un axe de pivotement du bâti et ledit dispositif de verrouillage comporte une pièce de verrouillage mobile en pivotement autour d'un axe parallèle à l'axe de pivotement de ladite mâchoire.

On aurait pu envisager le fonctionnement d'un tel dispositif de verrouillage avec une tête d'infusion à mouvement de coulissement par exemple vertical ou horizontal, mais une mâchoire à mouvement de pivotement assure une course plus importante de son extrémité pour un effort de poussée relativement faible exercé autour de son articulation. Dans cet agencement, le pivotement de la mâchoire à lieu à l'une de ses extrémités autour d'une articulation supportée par le bâti de la machine, alors que la pièce de verrouillage agit à l'extrémité opposée de la mâchoire.

On préfère alors agencer cette pièce de verrouillage de manière pivotante autour d'un axe parallèle à celui de la mâchoire ou au plan d'ouverture de la tête d'infusion. D'autres solutions auraient pu, certes, être envisagées pour le déplacement de la pièce de verrouillage, par exemple en translation dans un cran de la mâchoire ou en rotation autour d'un axe proéminent de cette dernière en étant perpendiculaire à l'axe de pivotement de la mâchoire, etc.

Utilement, ledit dispositif de verrouillage comporte des seconds moyens de rappel élastiques pour ramener ladite pièce de verrouillage en position verrouillée.

Le dispositif de verrouillage de la machine utilise de préférence un électroaimant à double effet, qui commande ainsi l'ouverture de la tête d'infusion et qui permet en même temps de maintenir verrouillée la tête d'infusion lors de sa fermeture. Toutefois, l'utilisation desdits seconds moyens de rappel élastiques permet de ramener la pièce de verrouillage vers sa position neutre correspondant à sa position de fermeture. Ceci facilite la fermeture de la mâchoire par l'utilisateur, la pièce de verrouillage venant immédiatement, sous la poussée des moyens de rappel, en prise avec la partie correspondante de la mâchoire. De surcroît, ceci permet, dans une variante simplifiée, l'utilisation d'un électroaimant à simple effet qui commande uniquement l'ouverture de la mâchoire, alors que la fermeture est assurée par les seconds moyens de rappel élastiques.

Avantageusement, ladite pièce de verrouillage comprend, dans un plan perpendiculaire à son axe de pivotement, en partie haute, un crochet coopérant avec un doigt de verrouillage de la mâchoire, ledit crochet étant prolongé vers le bas par un bras de levier destiné à être actionné par ledit électroaimant.

Ainsi, cette pièce de verrouillage pivote autour d'un axe, de préférence médian, un crochet étant prévu en l'extrémité supérieure de la pièce de verrouillage pour venir en prise avec un doigt en correspondance de la mâchoire, alors que son extrémité inférieure sert d'actionnement en étant reliée à l'électroaimant. Le bras de levier amplifie ainsi la course du crochet, ce qui permet l'utilisation d'un électroaimant de petite taille et commandé par un courant de faible intensité, plus économique.

Utilement, ladite pièce de verrouillage comprend, du côté extérieur de son axe de pivotement, une partie saillante formant bouton de manoeuvre.

Ainsi, cette partie saillante vers l'extérieur sert de bouton de manoeuvre pour l'actionnement manuel en ouverture de la mâchoire, par exemple lorsque l'électroaimant est hors tension et que l'on souhaite ouvrir la mâchoire, pour nettoyer la tête d'infusion ou avant qu'un cycle d'infusion n'ait été sélectionné, etc.

Avantageusement, ledit bras de levier coopère avec une tige traversant la largeur de la tête d'infusion, ladite tige coopérant à son extrémité avec ledit électroaimant.

Un actionnement direct par l'électroaimant du bras de levier pouvant également être envisagé, on préfère toutefois interposer entre les deux pièces une tige d'actionnement. Ceci permet d'utiliser une tige d'actionnement du levier qui est très fine et qui peut traverser la tête d'infusion sans être encombrante, On peut alors placer l'électroaimant, qui lui a des dimensions plus importantes que la tige, à l'extrémité de cette dernière, à l'intérieur du bâti de la machine et derrière la tête d'infusion. Ceci permet d'avoir un dispositif automatique d'ouverture de la mâchoire qui est efficace, tout en étant très discret.

De préférence, lesdits moyens de commande dudit dispositif de verrouillage comprennent un microcontrôleur connecté aux moyens de réglage des paramètres d'infusion pour commander ledit électroaimant en fonction desdits paramètres d'infusion.

Dans une variante simplifiée, on pourrait envisager l'utilisation d'organes de régulation électromécaniques, par exemple une minuterie connectée à un relais de commande de l'électroaimant lorsqu'un intervalle de temps s'est écoulé. En sous variante, on aurait pu associer l'utilisation d'un thermostat afin de déclencher la minuterie uniquement si une température de consigne, témoignant de la température de l'eau dans la chaudière, avait été atteinte avant de déclencher la minuterie. On préfère toutefois l'utilisation d'un microcontrôleur car il est apte à gérer d'une manière précise les valeurs de consigne de plusieurs paramètres et les valeurs mesurées à des intervalles de temps précis de ces paramètres et ainsi commander, d'une manière plus pointue et fiable, le moment d'ouverture de la tête d'infusion.

De préférence, ledit microcontrôleur est relié à au moins un capteur représentatif de l'état d'un paramètre d'infusion et il gère un cycle d'infusion en fonction de l'évolution de ce paramètre.

Ainsi, ce capteur peut être un débitmètre qui mesure la quantité d'eau écoulée à travers une dose à partir du début d'un cycle d'infusion. Les impulsions transmises par le débitmètre au microcontrôleur sont alors prises en compte pour commander l'arrêt de l'eau d'infusion et par la suite l'ouverture du dispositif de verrouillage. Le microcontrôleur pourrait avantageusement être relié à un capteur de température, par exemple de type résistif dont la valeur de la résistance varie en fonction de sa température, capteur placé au contact de la chaudière. Un tel capteur peut renseigner le microcontrôleur sur la quantité d'eau qui traverse la chaudière, ce dernier commandant alors l'ouverture du dispositif de verrouillage et/ou le fonctionnement de la machine. Dans une version simplifiée, le microcontrôleur mesure uniquement le temps d'infusion à partir du moment où l'une ou plusieurs valeurs de consigne des paramètres de fonctionnement ont été atteintes.

Utilement, la machine à café de l'invention comprend un contact électrique actionné par l'ouverture de ladite mâchoire et connecté audit microcontrôleur pour lui permettre de détecter la position ouverte ou fermée de la mâchoire.

Ceci permet de déclencher un cycle d'infusion uniquement si la mâchoire est en position fermée.

De préférence, ledit microcontrôleur est relié à un capteur de situation critique qui commande l'ouverture de ladite mâchoire lorsqu'une condition limite de ce paramètre à été atteinte.

Ainsi, la mâchoire restant ouverte, un cycle d'infusion ne peut pas être effectué si un disfonctionnement de la machine à été signalé. Ce capteur de situation critique peut avantageusement être un capteur de température témoignant de la température de la chaudière, un circuit de mesure de l'intensité du courant absorbé par la pompe, un capteur témoignant de la présence du réservoir ou du niveau d'eau dans ce dernier, etc. Dans ce cas, le microcontrôleur peut commander l'ouverture de la mâchoire et/ou la mise hors tension de la machine, et/ou l'indication sur un afficheur du type de disfonctionnement.

L'invention sera mieux comprise à l'étude des modes de réalisation pris à titre nullement limitatif et illustrés aux figures annexées dans lesquelles :
- la figure 1 est une vue générale en perspective d'une machine à café selon l'invention, en sa position ouverte ;
- la figure 2 est une vue en coupe axiale partielle de la partie avant de la machine montrant la tête d'infusion en sa position ouverte ;
- la figure 3 est une vue similaire à celle de la figure 2, mais avec la tête d'infusion en position fermée.

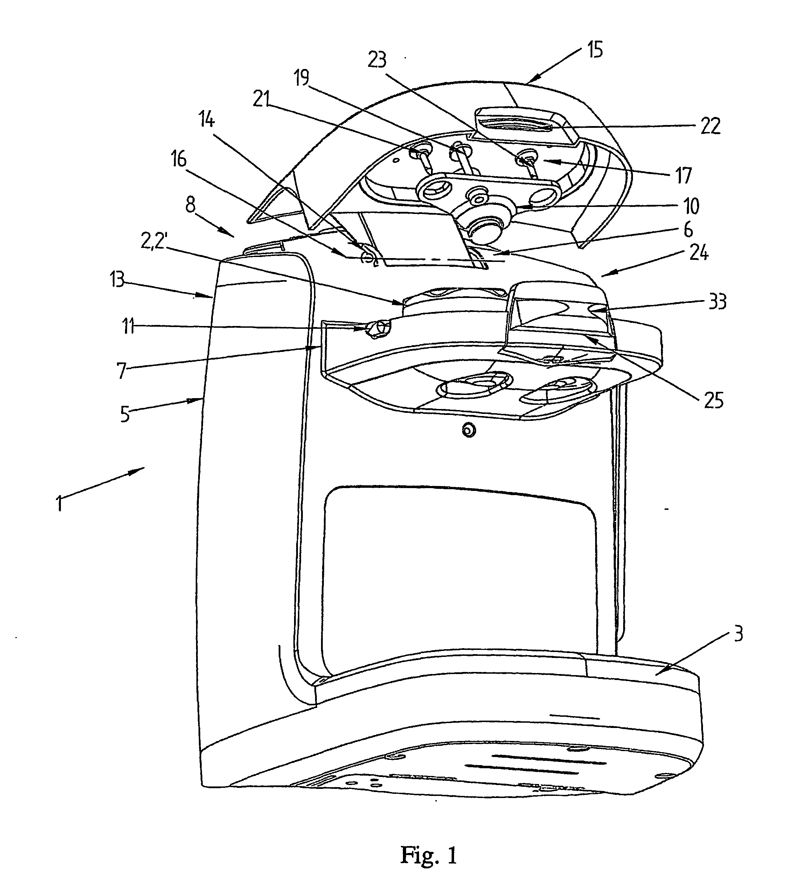

Comme illustré sur la figure 1, le bâti 1 de la machine à café comprend une base 3 horizontale inférieure complétée d'un montant vertical arrière 5. Un plateau horizontal 7 est fixé à partir du montant arrière à une hauteur permettant le positionnement sous-jacent d'un récipient, tel que tasse, gobelet ou verseuse.

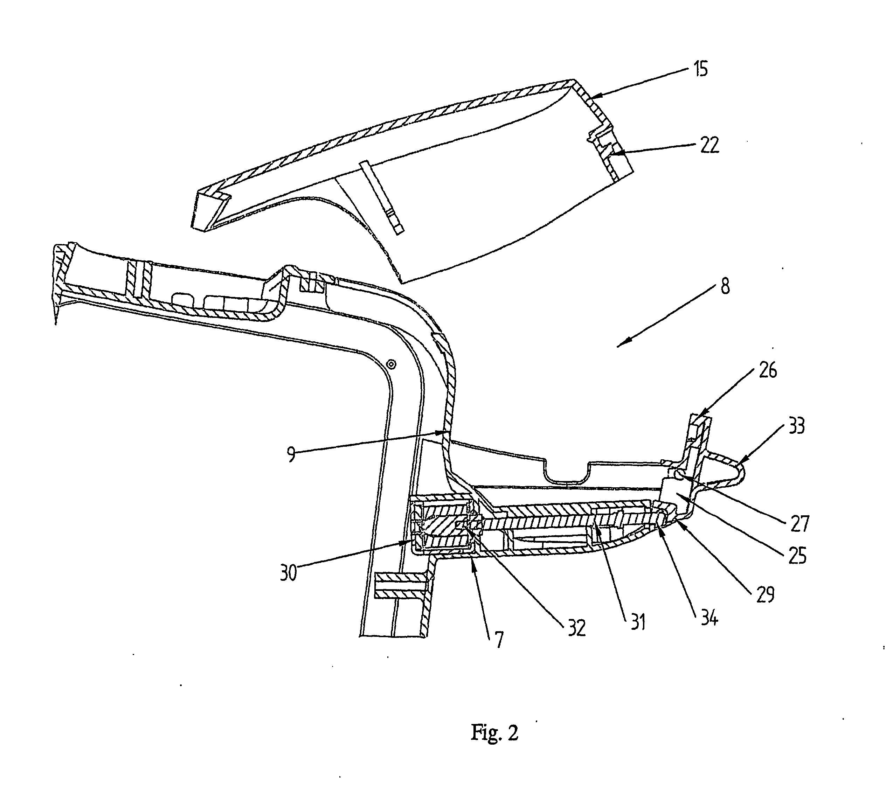

Tel que mieux visible à la figure 2, la face supérieure de l'extrémité frontale du plateau 7 présente un logement 9 dans lequel peut être installé un support 11 amovible pour deux doses 2,2' côte-à-côte.

L'extrémité postérieure du plateau 7 est complétée par deux parois latérales 13 supportant en rotation une mâchoire 15 raccordée aux parois latérales 13 du plateau 7 par une charnière 6. La mâchoire 15 est ramenée en position écartée du plateau 7 par des premiers moyens de rappel 14 qui sont, dans l'exemple représenté, sous forme d'un ressort hélicoïdal de torsion intégré à la charnière 6 assurant une large ouverture de l'appareil lorsque la mâchoire est en position haute.

L'extrémité frontale de la mâchoire 15 comporte une traverse constituant une base de montage 17 pour une pluralité d'aiguilles 19, 21 et 23 orientées vers le bas en direction des doses. Les aiguilles 19, 21, 23 sont creuses et présentent, à l'une de leurs extrémités supportée par la base de montage 17, un embout de raccord à un conduit d'alimentation en eau chaude d'infusion, alors que l'extrémité opposée présente une pointe et une ouverture d'injection d'eau dans la dose 2.

Les doses sont placées dans des logements prévus à cet effet dans le support amovible 11, où un premier logement est apte à recevoir une dose 2 de café moulu, alors qu'un deuxième logement peut recevoir soit une dose 2' de produit soluble de plus grandes dimensions, par exemple de lait, soit une dose 2 de café moulu, la machine pouvant fonctionner avec deux types différents de doses simultanément. Ainsi, on remarque une aiguille 19 plus longue venant en correspondance avec une dose de grand format ou dose particulière 2', alors que les aiguilles 21,23 plus courtes sont prévues pour venir en correspondance chacune avec une dose de petit format ou dose standard 2. La quantité d'eau envoyée à travers les aiguilles 19,21,23 varie en fonction du type de dose et en fonction du volume de la tasse. Un dispositif de protection 10 des aiguilles 19,21,23 est solidaire de la base de montage 17 des aiguilles et il masque la partie pointue de perforation des aiguilles lorsque la mâchoire 15 est en position ouverte.

Les doses 2 sont placées dans le support 11 du logement 9 qui forment ensemble la partie fixe d'une tête d'infusion 8. La partie mobile de la tête d'infusion est représentée par la mâchoire 15 portant les aiguilles 19,21,23 et les raccords aux conduits d'alimentation en eau chaude.

Par ailleurs la machine comporte, à l'intérieur du bâti 1, une pompe du type électromagnétique qui envoie l'eau d'un réservoir d'eau froide supporté par le bâti 1, dans une chaudière d'où l'eau chaude passe dans les tuyaux d'alimentation des aiguilles 19,21,23 moyennant des électrovannes pilotées par un microcontrôleur.

Selon l'invention, la machine comporte un dispositif de verrouillage 24 de la mâchoire 15 en position abaissée qui comprend une pièce de verrouillage 25, située en l'extrémité frontale de la partie inférieure de la tête d'infusion 8, venant s'accrocher dans un doigt 22 en correspondance ménagé en l'extrémité de la mâchoire 15.

La pièce de verrouillage 25 est montée en rotation autour d'un axe 27 de pivotement situé en extrémité frontale du logement 9 de la tête d'infusion 8. La pièce de verrouillage 25 comprend, dans un plan perpendiculaire à l'axe 27, au-dessus de cet axe 27, un crochet 26 coopérant avec le doigt 22 de verrouillage de la mâchoire 15. Le crochet 26 est prolongé vers le bas, du côté opposé de l'axe 27 par un bras de levier 29 destiné à être actionné par une tige 31, tel qu'il sera expliqué par la suite. Par ailleurs, la face frontale de la pièce de verrouillage 25 comporte une partie saillante formant bouton de manoeuvre 33 accessible de l'extérieur afin de pouvoir ouvrir volontairement la mâchoire 15.

Plus particulièrement selon l'invention, la machine à café comporte des moyens de réglage des paramètres d'infusion, par exemple un bouton sélecteur de fonction relié à un microcontrôleur qui gère le fonctionnement de la machine. Ce microcontrôleur est relié à des moyens de commande qui agissent sur un électroaimant 30 qui actionne le dispositif de verrouillage 24.

L'électroaimant 30 est monté adjacent à l'extrémité 32 de la tige 31 qui présente une extrémité opposée 34 en forme de crochet venant en prise avec un cran correspondant du bras de levier 29. Lorsque l'électroaimant 30 pousse l'extrémité 32 de la tige 31, la pièce de verrouillage 25 pivote autour de son axe 27 et son crochet 26 est verrouillé dans le doigt 22 de la mâchoire 15. A l'inverse, lorsque l'électroaimant 30 attire l'extrémité 31 de la tige 31, la pièce de verrouillage 25 pivote en sens inverse, ce qui libère le doigt 22 de la mâchoire 15 qui revient alors vers sa position haute sous la poussée des premiers moyens de rappel 14.

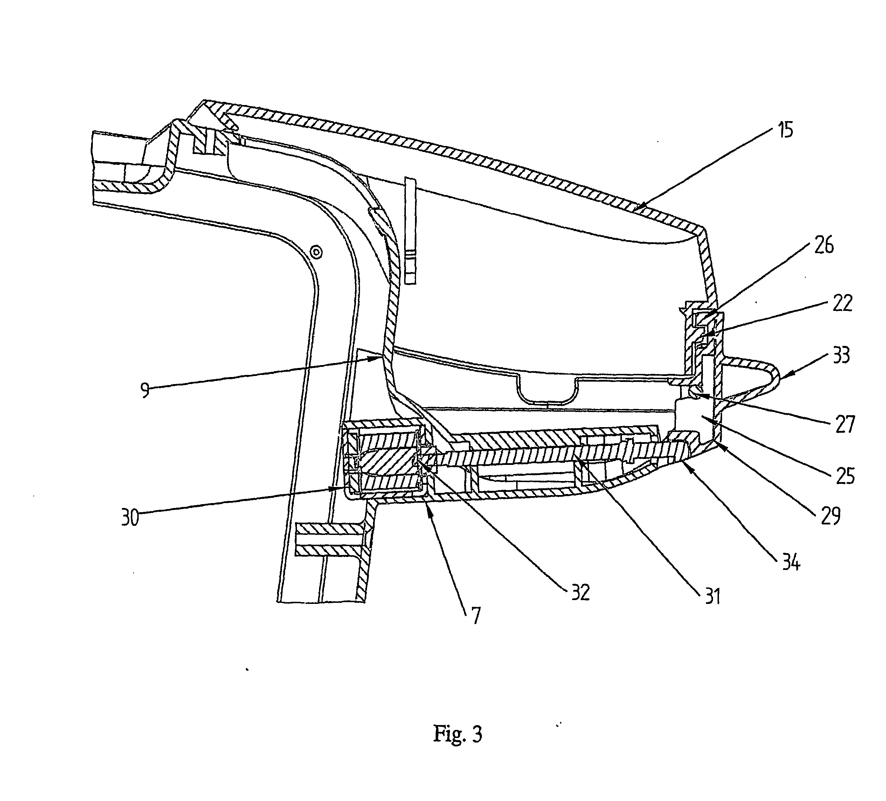

Le fonctionnement de l'électroaimant 30 est géré par un microcontrôleur qui gère en même temps les cycles d'infusion de la machine en fonction de l'option choisie par l'utilisateur via un panneau de commande ou un bouton sélecteur de fonction. Ce microcontrôleur détecte d'abord le moment de début de cycle d'infusion et transmet un signal aux moyens de commande de l'électroaimant qui verrouillent la mâchoire en position fermée (fig.3). Une fois le cycle d'infusion terminé, le microcontrôleur transmet un signal aux moyens de commande de l'électroaimant qui ouvrent alors la mâchoire 15.

En début d'utilisation, alors que le bouton sélecteur de fonction est dans une position autre que celle d'injection d'eau, l'utilisateur enfonce le bouton de manoeuvre 33 libérant ainsi la mâchoire 15 qui s'ouvre. L'utilisateur peut alors mettre une dose standard 2 dans un premier logement du support 11 de la tête d'infusion 8 et une dose particulière 2' dans le logement voisin, s'il désire confectionner un café au lait, ou deux doses standard 2 dans chacun des deux logements au cas où il veut confectionner deux cafés noirs en même temps.

Une fois les doses installées dans la tête d'infusion, l'utilisateur appuie sur la partie frontale de la mâchoire 15 en la faisant pivoter vers le bas jusqu'à ce que le crochet 26 du logement 9 vienne s'accrocher dans un doigt 22 en correspondance ménagé en l'extrémité de la mâchoire 15. Lorsque la mâchoire 15 descend vers sa position verrouillée, les aiguilles 19, 21, 23 perforent les doses 2, 2' et prennent place à l'intérieur des doses.

En cette position la mâchoire est verrouillée et la cafetière est prête à effectuer un cycle d'infusion. L'utilisateur met la cafetière sous tension en agissant sur un bouton de commande marche/arrêt. L'élément chauffant est alors alimenté et la chaudière s'échauffe rapidement. Quand le capteur de température informe que la bonne température de la chaudière à été atteinte, l'utilisateur agit sur le bouton sélecteur ou le panneau de commande pour commander un cycle d'injection d'eau. A ce moment, le dispositif de verrouillage 24 est bloqué, par l'électroaimant, de telle sorte à interdire toute action de l'utilisateur sur le bouton 33 et l'empêcher ainsi d'ouvrir la mâchoire pendant ce cycle. L'eau d'infusion est alors envoyée par la pompe à travers les doses 2, 2'. La boisson infusée s'écoule ensuite dans un ou deux récipient(s) collecteur(s).

En fin de cycle d'infusion, le microcontrôleur met sous tension inverse l'électroaimant 30 qui libère le doigt 22 et entraîne l'ouverture automatique de la mâchoire 15.

D'autres variantes et modes de réalisation de l'invention peuvent être envisagés sans sortir du cadre de ses revendications.

Ainsi, dans une variante de l'invention, l'électroaimant est à simple effet et exerce une action de verrouillage pendant le cycle d'injection. La machine peut dans ce cas comporter un indicateur visuel du type LED, ou un indicateur auditif qui avertit l'utilisateur que le café est prêt et qu'il peut ouvrir la machine. Dans ce cas, l'utilisateur actionne un bouton de manoeuvre qui met l'électroaimant 30 hors tension, ce qui libère le doigt 22 et entraîne l'ouverture de la mâchoire 15.

Dans une autre variante, l'électroaimant 30 est commandé par une unité de mesure du temps, dès que le temps d'infusion choisi par l'utilisateur ou calculé par le microcontrôleur s'est écoulé.

Dans une autre variante, l'électroaimant 30 est commandé en verrouillage de la mâchoire fermée par un capteur de température ou tout autre organe de contrôle témoignant d'un état critique ou d'un disfonctionnement de la machine.

Dans encore une autre variante, l'électroaimant ne peut pas être mis sous tension si une condition de fermeture de la mâchoire n'a été préalablement détectée.

Selon une autre configuration de la machine, il peut s'avérer utile d'avoir un déplacement en translation du crochet de la pièce de verrouillage par rapport au doigt situé en extrémité frontale de la mâchoire. Pour ceci, on peut agencer le pivot de rotation en l'extrémité du bras de levier, l'électroaimant actionnant alors la pièce de verrouillage quelque part entre ce pivot inférieur et le crochet. On obtient ainsi un déplacement en arc de cercle de rayon important du crochet supérieur, ce qui est proche d'un déplacement en translation.

## Revendications

1. Machine à café apte à fonctionner avec des doses, comprenant un bâti (1) de réception des moyens d'alimentation en eau chaude d'une tête d'infusion (8) en deux parties : une partie fixe formant support pour au moins une dose (2) et une partie mobile pour ouvrir et fermer ladite tête d'infusion (8), les deux parties étant maintenues écartées par des premiers moyens de rappel élastiques (14), un dispositif de verrouillage (24) pour maintenir la tête d'infusion (8) fermée à l'encontre desdits moyens de rappel et des moyens de réglage des paramètres d'infusion aptes à émettre au moins un signal représentatif de l'état de fonctionnement de la machine, **caractérisée en ce que**, en fonctionnement, le dispositif de verrouillage est bloqué de manière à empêcher l'ouverture de la partie mobile de la chambre d'infusion et qu'elle comporte des moyens de commande de l'ouverture dudit dispositif de verrouillage à l'issue du signal émis par lesdits moyens de réglage.

2. Machine à café selon la revendication 1, **caractérisée en ce que** ledit dispositif de verrouillage (24) comporte une pièce de verrouillage (25) mobile entre une position verrouillée et une position déverrouillée en étant actionnée par un électroaimant (30) commandé par lesdits moyens de commande.

3. Machine à café selon l'une des revendications 1 ou 2, **caractérisée en ce que** la partie mobile de la tête d'infusion est une mâchoire (15) montée pivotante par rapport à un axe de pivotement (16) du bâti et que ledit dispositif de verrouillage (24) comporte une pièce de verrouillage (25) mobile en pivotement autour d'un axe (27) parallèle à l'axe de pivotement (16) de ladite mâchoire.

4. Machine à café selon l'une des revendications 2 ou 3, **caractérisée en ce que** ledit dispositif de verrouillage (24) comporte des seconds moyens de rappel élastiques pour ramener ladite pièce de verrouillage (25) en position verrouillée.

5. Machine à café selon l'une des revendications 3 à 4, **caractérisée en ce que** ladite pièce de verrouillage (25) comprend, dans un plan perpendiculaire à son axe (27) de pivotement, en partie haute, un crochet (26) coopérant avec un doigt (22) de verrouillage de la mâchoire (15), ledit crochet (26) étant prolongé vers le bas par un bras de levier (29) destiné à être actionné par ledit électroaimant (30).

6. Machine à café selon la revendication 5, **caractérisée en ce que** ladite pièce de verrouillage (25) comprend, du côté extérieur de son axe (27) de pivotement, une partie saillante formant bouton de manoeuvre (33).

7. Machine à café selon l'une des revendications 5 ou 6, **caractérisée en ce que** ledit bras de levier (29) coopère avec une tige (31) traversant la largeur de la tête d'infusion (8), ladite tige (31) coopérant à son extrémité (32) avec ledit électroaimant (30).

8. Machine à café selon l'une des revendications 2 à 7, **caractérisée en ce que** lesdits moyens de commande dudit dispositif de verrouillage (24) comprennent un microcontrôleur connecté aux moyens de réglage des paramètres d'infusion pour commander ledit électroaimant (30) en fonction desdits paramètres d'infusion.

9. Machine à café selon la revendication 8, **caractérisée en ce que** ledit microcontrôleur est relié à au moins un capteur représentatif de l'état d'un paramètre d'infusion et gère un cycle d'infusion en fonction de l'évolution de ce paramètre.

10. Machine à café selon l'une des revendications 8 ou 9, **caractérisée en ce qu'**elle comprend un contact électrique actionné par l'ouverture de ladite mâchoire et connecté audit microcontrôleur pour lui permettre de détecter la position ouverte ou fermée de la mâchoire.

11. Machine à café selon l'une des revendications 8 à 10, **caractérisée en ce que** ledit microcontrôleur est relié à un capteur de situation critique qui commande l'ouverture de ladite mâchoire lorsqu'une condition limite de ce paramètre à été atteinte.

## Patentansprüche

1. Kaffeemaschine, die mit Kapseln funktionieren kann, mit einem Gehäuse (1) zur Aufnahme von Mitteln zur Versorgung eines Aufgusskopfes (8) mit warmen Wasser, welcher aus zwei Teilen besteht: aus einem festen Teil, der einen Träger für mindestens eine Kapsel (2) bildet, und aus einem beweglichen Teil zum Öffnen und Schließen des Aufgusskopfes (8), wobei die beiden Teile durch erste elastische Rückstellmittel (14) voneinander beabstandet gehalten werden, mit einer Verriegelungsvorrichtung (24), um den Aufgusskopf (8) entgegen den Rückstellmitteln geschlossen zu halten, und mit Mitteln zum Einstellen von Aufgussparametern, die mindestens ein den Betriebszustand der Maschine repräsentierendes Signal senden können, **dadurch gekennzeichnet**, das die Verriegelungsvorrichtung im Betrieb so blockiert ist, dass das Öffnen des beweglichen Teils der Aufgusskammer verhindert wird, und dass die Kaffeemaschine Mittel zur Steuerung des Üffnens der Verriegelungsvorrichtung aufgrund des von den Einstellmitteln gesendeten Signals aufweist.

2. Kaffeemaschine nach Anspruch 1, **dadurch gekennzeichnet, dass** die Verriegelungsvorrichtung (24) ein Verriegelungselement (25) aufweist, das zwischen einer verriegelten und einer entriegelten Position bewegbar ist, indem es durch einen Elektromagneten (30) betätigt wird, der von den Steuermitteln gesteuert wird.

3. Kaffeemaschine nach Anspruch 1 oder 2, **dadurch gekennzeichnet, dass** der bewegliche Teil des Aufgusskopfes eine Backe (15) ist, die bezüglich einer Schwenkachse (16) des Gehäuses schwenkbar angebracht ist, und dass die Verriegelungsvorrichtung (24) ein Verriegelungselement (25) aufweist, das um eine zur Schwenkachse (16) der Backe parallele Achse (27) schwenkbeweglich ist.

4. Kaffeemaschine nach Anspruch 2 oder 3, **dadurch gekennzeichnet, dass** die Verriegelungsvorrichtung (24) zweite elastische Rückstellmittel aufweist, um das Verriegelungselement (25) in die verriegelte Position zurückzustellen.

5. Kaffeemaschine nach Anspruch 3 oder 4, **dadurch gekennzeichnet, dass** das Verriegelungselement (25) in einer Ebene, die zu seiner Schwenkachse (27) senkrecht ist, im oberen Teil einen Haken (26) aufweist, der mit einem Zapfen (22) zur Verriegelung der Backe (15) zusammenwirkt, wobei der Haken (26) durch einen Hebelarm (29) nach unten verlängert ist, welcher durch den Elektromagneten (30) betätigt werden soll.

6. Kaffeemaschine nach Anspruch 5, **dadurch gekennzeichnet, dass** das Verriegelungselement (25) auf der Außenseite seiner Schwenkachse (27) einen vorstehenden Teil aufweist, der einen Betätigungskopf (33) bildet.

7. Kaffeemaschine nach Anspruch 5 oder 6, **dadurch gekennzeichnet, dass** der Hebelarm (29) mit einer Stange (31) zusammenwirkt, welche die Breite des Aufgusskopfes (8) durchquert und an ihrem Ende (32) mit dem Elektromagneten (30) zusammenwirkt.

8. Kaffeemaschine nach einem der Ansprüche 2 bis 7, **dadurch gekennzeichnet, dass** die Steuermittel der Verriegelungsvorrichtung (24) eine Mikrosteuereinheit aufweisen, die mit den Mitteln zum Einstellen der Aufgussparameter verbunden ist, um den Elektromagneten (30) in Abhängigkeit von den Aufgussparametern zu steuern.

9. Kaffeemaschine nach Anspruch 8, **dadurch gekennzeichnet, dass** die Mikrosteuereinheit mit mindestens einem für den Zustand eines Aufgussparameters repräsentativen Sensor verbunden ist und einen Aufgusszyklus in Abhängigkeit von der Änderung dieses Parameters steuert.

10. Kaffeemaschine nach Anspruch 8 oder 9, **dadurch gekennzeichnet, dass** sie einen elektrischen Kontakt aufweist, der durch das Öffnen der Backe betätigt wird und mit der Mikrosteuereinheit so verbunden ist, dass diese die geöffnete oder geschlossene Position der Backe erfassen kann.

11. Kaffeemaschine nach einem der Ansprüche 8 bis 10, **dadurch gekennzeichnet, dass** die Mikrosteuereinheit mit einem eine kritische Situation erfassenden Sensor verbunden ist, der das Öffnen der Backe steuert, wenn eine Grenzbedingung dieses Parameters erreicht worden ist.

## Claims

1. A coffee machine suitable for operating with pre-packed portions, said coffee machine comprising: a structure (1) for receiving feed means for feeding hot water to a brewing head (8) made up of two portions, namely a stationary portion forming a support for at least one pre-packed portion (2) and a moving portion for opening and closing said brewing head (8), the two portions being held spaced apart by first resilient return means (14); a locking device (24) for holding the brewing head (8) closed against the drive from said return means; and setting means for setting the brewing parameters, which setting means are suitable for emitting at least one signal representing the state of operation of the machine, said coffee machine being **characterized in that**, during operation of the coffee machine, the locking device is locked so as to prevent the moving portion of the brewing chamber from opening, and **in that** said coffee machine further comprises control means for causing said locking device to open once a signal has been emitted by said setting means.

2. A coffee machine according to claim 1, **characterized in that** said locking device (24) comprises a locking piece (25) mounted to move between a locked position and an unlocked position by being actuated by an electromagnet (30) controlled by said control means.

3. A coffee machine according to claim 1 or claim 2, **characterized in that** the moving portion of the brewing head is a jaw (15) mounted to pivot about a pivot axis (16) on the structure, and **in that** said locking device (24) comprises a locking piece (25) mounted to pivot about an axis (27) parallel to the pivot axis (16) of said jaw.

4. A coffee machine according to claim 2 or claim 3, **characterized in that** said locking device (24) further comprises second resilient return means for returning said locking piece (25) into a locked position.

5. A coffee machine according to claim 3 or claim 4, **characterized in that**, in a plane perpendicular to its pivot axis (27), and in its top portion, said locking piece (25) is provided with a hook (26) co-operating with a locking finger (22) of the jaw (15), said hook (26) being extended downwards by a lever arm (29) designed to be actuated by said electromagnet (30).

6. A coffee machine according to claim 5, **characterized in that**, on the outside of its pivot axis (27), said locking piece (25) is provided with a projecting portion forming a drive button (33).

7. A coffee machine according to claim 5 or claim 6, **characterized in that** said lever arm (29) co-operates with a rod (31) passing through the width of the brewing head (8), said rod (31) co-operating at its end (32) with said electromagnet (30).

8. A coffee machine according to any one of claims 2 to 7, **characterized in that** said control means for controlling said locking device (24) comprise a microcontroller connected to the brewing parameter setting means so as to control said electromagnet (30) as a function of said brewing parameters.

9. A coffee machine according to claim 8, **characterized in that** said microcontroller is connected to at least one sensor representative of the state of a brewing parameter, and said microcontroller controls a brewing cycle as a function of the variation in said parameter.

10. A coffee machine according to claim 8 or claim 9, **characterized in that** it further comprises an electrical contact actuated by said jaw opening, and connected to said microcontroller so as to enable it to detect whether the jaw is in the open position or in the closed position.

11. A coffee machine according to any one of claims 8 to 10, **characterized in that** said microcontroller is connected to a critical situation sensor that causes said jaw to open when said parameter reaches a limit condition.
